# EUROPÄISCHE PATENTSCHRIFT

(11) **EP 0 476 772 B1**
(45) Veröffentlichungstag und Bekanntmachung des Hinweises auf die Patenterteilung: **25.08.1993**
(21) Anmeldenummer: 91202370.2
(22) Anmeldetag: 17.09.1991
(51) Int. Cl.: B23K 1/19, C04B 37/02, H01J 35/10

(54) **Verfahren zur Herstellung hochfester Lötverbindungen**
Procedure for the fabrication of high-strength brazing joints
Procédé pour la fabrication d'assemblages par brasage à haute résistance

(30) Priorität: 21.09.1990 AT 1918/90
(43) Veröffentlichungstag der Anmeldung: 25.03.1992
(73) Patentinhaber: METALLWERK PLANSEE GESELLSCHAFT M.B.H., 6600 Reutte, Tirol (AT)
(72) Erfinder: Friedrich, Christian, A-6600 Pflach (AT); Reheis, Nikolaus, Ing., A-6460 Jerzens (AT); Thalmann, Walter, A-6600 Breitenwang (AT)
(74) Vertreter: Lohnert, Wolfgang, Dr.

(56) Entgegenhaltungen:
- AT-B- 362 459
- DE-A- 1 652 840
- DE-A- 2 759 148
- DE-B- 1 951 383
- DE-C- 730 221

## Beschreibung

Die Erfindung betrifft ein Verfahren zur Herstellung hochfester Lötverbindungen bei Metall-Keramik- und Keramik-Keramik-Werkstoffverbunden, bei dem die zu verlötende Oberfläche des keramischen Materials vor dem Verlöten zur Erzielung einer vergrößerten Oberfläche strukturiert wird.

Für eine Reihe von Anwendungen ist es aufgrund der speziellen Anforderungen notwendig, anstelle von einheitlichen Materialien, spezielle Werkstoffverbunde einzusetzen, bei denen verschiedene Materialien mit teilweise sehr unterschiedlichen Eigenschaften miteinander verbunden sind.

Für spezielle Hochtemperatur-Anwendungen haben sich beispielsweise Werkstoffverbunde aus Graphit mit hochschmelzenden Metallen, wie Molybdän oder Wolfram bewährt, die gegenüber einkomponentigen Werkstoffen aus hochschmelzenden Metallen, insbesondere aufgrund der besseren Wärmespeicherfähigkeit und aufgrund des geringeren spezifischen Gewichtes von Graphit erweiterte Hochtemperatur-Anwendungen ermöglichen.

Eine wichtige Anwendung, bei der die Vorteile eines derartigen Werkstoffverbundes zum Tragen kommen, sind beispielsweise Drehanoden für Röntgenröhren.

Aber auch andere Metall-Keramik-Werkstoffverbunde sind technisch interessant und werden in zunehmendem Maß angewendet. Werkstoffverbunde aus Keramiken, wie Al₂O₃, Si₃N₄, SiC, TiO, TiN, TiC, ZrO₂, AlN, mit hochschmelzenden oder anderen Metallen sind hierzu beispielsweise zu nennen.

Darüberhinaus werden auch Werkstoffverbunde, bei denen Keramiken unterschiedlicher Eigenschaften miteinander verbunden sind, für spezielle Anwendungen eingesetzt.

Produkte, bei denen derartige Verbundwerkstoffe zum Einsatz kommen, sind beispielsweise Drehanoden für Röntgenröhren, Bauteile der Ersten Wand sowie Divertorplatten und Limiter für Fusionsreaktoren, Hochspannungsschalter, Stranggußkokillen, Elektroden und dgl.

Entscheidend für die Brauchbarkeit aller dieser Metall-Keramik- und Keramik-Keramik-Werkstoffverbunde ist eine mechanisch gute, vielfach zudem auch noch hochtemperaturfeste Verbindung zwischen den einzelnen Werkstoffkomponenten. Das Verlöten der einzelnen unterschiedlichen Werkstoffe miteinander wird zur Herstellung des Werkstoffverbundes häufig angewendet, da dadurch eine gute Wärmeleitfähigkeit zwischen den einzelnen Werkstoffen gewährleistet ist. Insbesondere für Hochtemperatur-Anwendungen haben sich Lote wie Zr, AgCuTi, CuTi und NiTi durchgesetzt. Da die zu verbindenden Werkstoffe oftmals sehr große unterschiedliche thermische Ausdehnungskoeffizienten haben, kommt es insbesondere bei zyklischen thermischen Beanspruchungen zu Spannungszuständen im Werkstoffverbund, die die Festigkeit der Lötverbindung beeinträchtigen und in Extremfällen zu einer Zerstörung des Bauteiles führen können.

Um die Festigkeit der Lötverbindung zu verbessern ist es üblich, die Oberfläche des keramischen Werkstoffes zu vergrößern, wie es beispielsweise durch Einbringung von Rillen oder Riefen durch spezielle mechanische Bearbeitung, wie z. B. mittels Drehen oder Fräsen erreicht werden kann.

So wird beispielsweise in der DE-AS 19 51 383, die eine Röntgenröhren-Verbunddrehanode aus einem hochschmelzenden Metallteil und einem oder mehreren daran angebrachten Graphitteilen betrifft vorgeschlagen, die für die Verlötung vorgesehene Oberfläche der Graphitteile mit die Oberfläche vergrößernden Strukturierungen, z. B. Rillen, zu versehen.

Aber diese bekannte Strukturierung der zu verlötenden Oberfläche ist vielfach nicht ausreichend, um eine befriedigende Festigkeit der Lötverbindung zu erreichen.

Die AT-PS 362 459 beschreibt ein Verfahren zum Verbinden einzelner Teile einer Drehanode aus einem hochschmelzenden Metall mit einem oder mehreren Graphitteilen durch Verlöten. Bei diesem Verfahren werden in die zu verlötenden Graphitoberflächen Nuten eingebracht, die in Bohrungen münden, die senkrecht zur zu verlötenden Oberfläche eingebracht werden und die Graphitteile durchdringen. Die die Graphitteile durchdringenden Bohrungen bewirken, daß die bei der Lötung entstehenden Gase nach außen entweichen können und Lunkerbildungen in der Lötschicht weitgehend vermieden werden. Aufgrund der geringen Zahl der Bohrungen und aufgrund der Abmessungen der Bohrungen wird in erster Linie eine Ableitung der Gase erreicht, eine festigkeitssteigernde Vergrößerung der Lötoberfläche wird praktisch nicht erreicht. Daher wird auch bei Lötverbindungen, die
nach diesem Verfahren hergestellt werden, die Festigkeit der Verbindung der unterschiedlichen Werkstoffe den hohen Anforderungen, insbesondere auch im Hinblick auf Thermoschockbeständigkeit, oftmals nicht gerecht.

Die DE-OS 27 59 148 beschreibt ein Verfahren zur Herstellung einer Lötverbindung zwischen Teilen aus pyrolytischem Graphit miteinander oder mit metallischen Teilen, wobei das aus pyrolytischem Graphit bestehende Teil mit einer Ausnehmung versehen wird, in die das Lot beim Lötvorgang diese ausfüllend fließt. Das Verfahren ist speziell auf Verbindungen im Elektronenröhrenbau abgestimmt, wo die zu verbindenden Teile sehr dünn mit Dicken zwischen 20 und 100 µm sind.

In den näher beschriebenen und dargestellten Ausführungsformen sind die Ausnehmungen ausschließlich als das Teil aus pyrolytischem Graphit vollständig durchdringende Bohrungen oder Schlitze ausgeführt. Das führt zu einer Lötverbindung, bei der das Lot vielfach von der Berührungsfläche der zu verbindenden Teile abfließt und über die Bohrung auf den sich nicht berührenden Oberflächen austritt, wodurch sich eine punktförmige Verbindung in der Art einer Nietverbindung ergibt. Eine derartige Verbindung ist zum Verbinden von massiven, großvolumigen Teilen nicht geeignet.

Die DE-OS 16 52 840 beschreibt ein Verfahren, bei dem ein metallisches und ein keramisches Teil durch Hartlöten verbunden werden, wobei die zu verlötende Oberfläche des Metallteiles mit kapillarwirksamen Fließkanälen für das Hartlot, vorzugsweise in Form von parallel verlaufenden Riefen oder in Form einer Kordelung versehen wird. Nachteilig dabei ist, daß auch die Erhöhung der Oberflächenrauhigkeit auf diese Art für viele Fälle noch nicht ausreichend ist, um eine optimale Festigkeit der Lötverbindung zu erreichen.

Die Aufgabe der vorliegenden Erfindung ist es daher, ein Verfahren zur Herstellung hochfester Lötverbindungen bei Metall-Keramik- und Keramik-Keramik-Werkstoffverbunden zu schaffen, das zur Verbindung massiver Teile geeignet ist und bei Anwendung dessen die mechanische Festigkeit gegenüber bekannten Lötverbindungen nochmals verbessert ist und insbesondere auch bei thermischer Beanspruchung erhalten bleibt.

Erfindungsgemäß wird dies bei einem Verfahren der eingangs genannten Art dadurch erreicht, daß die Strukturierung durch Einbringung von Bohrungen, die das keramische Material nicht durchdringen, mit einem mittleren Durchmesser im Bereich von 50 µm - 500 µm und einer Tiefe im Bereich von 100 µm - 2 mm erfolgt.

Auf diese Art und Weise wird eine besonders gute Oberflächenvergrößerung erreicht, die insbesondere bei festigkeitsarmen Reaktionsschichten zu einer überraschend verbesserten Festigkeitssteigerung der Lötverbindung führt. Eine Ursache für die überraschende Festigkeitssteigerung dürfte darin liegen, daß durch die spezielle Oberflächengestaltung eine rißhemmende Wirkung in der Lotschicht erreicht wird. Darüberhinaus können durch eine spezielle Abstimmung der Durchmesser und der Tiefen der Bohrungen gezielte Veränderungen der thermomechanischen Werkstoffeigenschaften in den Übergangszonen zwischen Lot und den zu verbindenden Werkstoffen bewirkt werden sowie speziell bei anisotropen Grundwerkstoffen graduierte Übergangszonen bezüglich dieser Eigenschaften geschaffen werden. Der Spannungszustand im gesamten Werkstoffverbund wird durch die erfindungsgemäße Oberflächengestaltung erheblich reduziert. Bei Werkstoffverbunden, die ausschließlich aus keramischen Materialien bestehen, wird man die erfindungsgemäße Strukturierung der zu verlötenden Oberfläche in der Regel bei beiden zu verlötenden Teilen vornehmen. Es kann aber durchaus auch denkbar sein, die Strukturierung nur bei einem Teil vorzusehen.

Besonders vorteilhaft ist es, wenn die Bohrungen sich von der Oberfläche nach innen verjüngend, z. B. kegelförmig ausgeführt sind. Auf diese Art und Weise wird erreicht, daß beim Lötvorgang das Lot besonders gut in die Bohrungen eindringt.

Die Laserbearbeitung hat sich als eine besonders günstige Art bewährt die Bohrungen einzubringen. Die Bohrungen können dadurch besonders wirtschaftlich eingebracht werden und sind verfahrensbedingt automatisch kegelförmig ausgeführt.

Der Durchmesser und die Tiefe der Bohrungen sowie der Abstand der einzelnen Bohrungen zueinander ist abhängig von den speziellen Eigenschaften der zu verlötenden Materialien und von der Größe der zu verlötenden Flächen. In den meisten Fällen wird es zweckmäßig sein, die Bohrungen möglichst dicht aneinanderzureihen; auch ein Überlappen der einzelnen Bohrungen ist denkbar. Als vorteilhaft hat es sich dabei in der Regel erwiesen, wenn mindestens 10 % der zu verlötenden Fläche mit Bohrungen strukturiert ist. In bestimmten Fällen, insbesondere bei schwer zu bearbeitenden Materialien, kann es aber auch ausreichend sein, den Anteil der strukturierten Fläche kleiner zu wählen, wobei eine minimale Strukturierung von etwa 1 % nicht unterschritten werden sollte, da sonst der erwünschte Effekt der Festigkeitssteigerung der Lötverbindung praktisch kaum mehr vorhanden ist.
Bei relativ großem Abstand der einzelnen Bohrungen lassen sich dementsprechend auch große Lötflächen noch wirtschaftlich strukturieren.

Nach der Strukturierung der Lötfläche werden die zu verbindenden Werkstoffteile wie bei bisher bekannten Lötverfahren einer Ultraschallreinigung unterzogen und der endgültige Verbund unter Verwendung der üblichen Lote und unter bekannten Verfahrensbedingungen in einem Hochtemperatur-Hochvakuumlötofen hergestellt.

Im folgenden wird die Erfindung anhand von Beispielen näher erläutert.

### Beispiel 1

Ein Verbundkörper aus einem plattenförmigen, Kohlenstoffaser verstärkten Graphit(CFC)-Teil mit den Abmessungen 50x30x10 mm und einem plattenförmigen Teil aus der Molybdän-Legierung TZM mit denselben Abmessungen wurde nach dem erfindungsgemäßen Verfahren hergestellt. Dazu wurde der Graphitteil an seiner zu verlötenden Oberfläche mit kegelförmigen Bohrungen von maximal 0,2 mm Durchmesser und 0,75 mm Tiefe bei einem Bohrungsmittenabstand von 0,25 mm strukturiert. Die Bohrungen wurden mittels eines gepulsten Nd-YAG-Lasers unter den folgenden Bedingungen hergestellt.

Frequenz: 100 Hz, Pulslänge 0,1 ms, Pulsenergie 0,85 Joule, Objektiv f = 100 mm, Gas 3,5 bar O₂, Vorschub 1,8 mm/min. Danach wurden der CFC-Teil und der TZM-Teil im Ultraschallbad gereinigt. Auf die strukturierte Oberfläche des CFC-Teiles wurde anschließend eine 0,2 mm dicke Zirkon-Lötfolie aufgebracht und darauf der TZM-Teil positioniert. Der so geschichtete Lötaufbau wurde in einen Hochtemperatur-Hochvakuum-Lötofen eingebracht und innerhalb von 20 Minuten auf die Löttemperatur von 1700°C erwärmt und auf dieser Temperatur 5 Minuten gehalten. Dann wurde der Ofen unter Vakuum auf Raumtemperatur abgekühlt. Der erfindungsgemäß hergestellte Verbundkörper wurde mittels Ultraschall zerstörungsfrei geprüft. Die Lötverbindung wies keinerlei Risse und Lunker auf.

Zum Vergleich wurde ein Verbundkörper aus denselben Materialien und mit denselben Abmessungen hergestellt, bei dem die Oberfläche des CFC-Teiles nach dem Stand der Technik durch Abdrehen mit Rillen strukturiert wurde. Die weiteren Herstellungsbedingungen waren gleich wie beim erfindungsgemäß hergestellten Verbundkörper.

In einem Abscherversuch wurde die Festigkeit der Lötverbindung der beiden Verbundkörper miteinander verglichen.
Beim Verbundkörper, der nach dem Stand der Technik hergestellt wurde, erfolgte bei einer Abscherkraft von 15 KN der Bruch in der Lötschicht während demgegenüber beim erfindungsgemäß hergestellten Verbundkörper der Bruch bei 21 KN im CFC-Teil aufgrund des Überschreitens der Eigenfestigkeit des CFC-Materiales erfolgte und die Lötverbindung selbst unbeschädigt blieb.

### Beispiel 2

Ein scheibenförmiger Verbundkörper aus einem polykristallinen Graphitteil mit 100 mm Durchmesser und 20 mm Dicke und einem ringförmigen Teil aus einer Wolframlegierung mit 10 Gew.% Rhenium-Anteil mit einem Außendurchmesser von 100 mm, einem Innendurchmesser von 50 mm und 1 mm Dicke wurde nach dem erfindungsgemäßen Verfahren gleich wie der Verbundkörper nach Beispiel 1 hergestellt.
Zum Vergleich wurde ein Verbundkörper aus denselben Materialien und mit denselben Abmessungen, bei dem die Oberfläche des Graphitteiles nach dem Stand der Technik durch Abdrehen mit Rillen strukturiert wurde, hergestellt. Die weiteren Herstellungsbedingungen waren gleich wie beim erfindungsgemäß hergestellten Verbundkörper.

An beiden Verbundkörpern wurden thermomechanische Schocktests durchgeführt. Dazu wurden die Verbundkörper innerhalb von einer Minute von Raumtemperatur auf 600°C aufgeheizt und danach in Wasser auf Raumtemperatur abgeschreckt.
Beim Verbundkörper, der nach dem Stand der Technik hergestellt wurde, zeigte sich bereits nach 8 Temperaturzyklen eine Abhebung des ringförmigen Wolfram-Rhenium-Teiles, während beim erfindungsgemäß hergestellten Verbundkörper auch nach 20 Temperaturzyklen noch keine Beeinträchtigung der Verbindung des Werkstoffverbundes zu erkennen war.

## Patentansprüche

1. Verfahren zur Herstellung hochfester Lötverbindungen bei Metall-Keramik- und Keramik-Keramik-Werkstoffverbunden, bei dem die zu verlötende Oberfläche des keramischen Materials vor dem Verlöten zur Erzielung einer vergrößerten Oberfläche strukturiert wird,
**dadurch gekennzeichnet**,
daß die Strukturierung durch Einbringung von Bohrungen, die das keramische Material nicht durchdringen, mit einem mittleren Durchmesser im Bereich von 50 µm - 500 µm und einer Tiefe im Bereich von 100 µm - 2 mm erfolgt.

2. Verfahren zur Herstellung hochfester Lötverbindungen nach Anspruch 1, dadurch gekennzeichnet, daß die Bohrungen kegelförmig sind.

3. Verfahren zur Herstellung hochfester Lötverbindungen nach Anspruch 2, dadurch gekennzeichnet, daß die Bohrungen mittels Laser eingebracht werden.

4. Verfahren zur Herstellung hochfester Lötverbindungen nach einem der Ansprüche 1 - 3, dadurch gekennzeichnet, daß die einzelnen Bohrungen einheitliche Durchmesser, einheitliche Tiefen und einheitliche Abstände aufweisen.

5. Verfahren zur Herstellung hochfester Lötverbindungen nach einem der Ansprüche 1 - 4, dadurch gekennzeichnet, daß mindestens 10 % der zu verlötenden Fläche mit Bohrungen strukturiert ist.

## Claims

1. Method of manufacturing high-strength soldered joints for metal-ceramic and ceramic-ceramic composite materials, wherein the surface of the ceramic material to be soldered is textured prior to soldering to achieve an enlarged surface,
characterized in that
the texturing is effected by introducing bores, which do not penetrate the ceramic material, with a mean diameter in the region of 50 µm - 500 µm and a depth in the region of 100 µm - 2 mm.

2. Method of manufacturing high-strength soldered joints according to claim 1, characterized in that the bores are conical.

3. Method of manufacturing high-strength soldered joints according to claim 2, characterized in that the bores are introduced by laser.

4. Method of manufacturing high-strength soldered joints according to one of claims 1 to 3, characterized in that the individual bores have uniform diameters, uniform depths and are at uniform distances from one another.

5. Method of manufacturing high-strength soldered joints according to one of claims 1 to 4, characterized in that at least 10% of the surface area to be soldered is textured with bores.

## Revendications

1. Procédé de fabrication d'assemblages par brasure à haute résistance, du type composites métal-céramique et céramique-céramique, dans lequel la surface à braser de la matière céramique est structurée avant le brasage afin d'obtenir une surface accrue,
**caractérisé en ce que**
la structuration est réalisée en ménageant des alésages, d'un diamètre moyen situé dans la plage de 50 µm à 500 µm et d'une profondeur située dans la plage de 100 µm à 2 mm, qui ne traversent pas la matière céramique.

2. Procédé de fabrication d'assemblages par brasure à haute résistance selon la revendication 1,
caractérisé en ce que les alésages sont de forme conique.

3. Procédé de fabrication d'assemblages par brasure à haute résistance selon la revendication 2,
caractérisé en ce que les alésages sont réalisés par laser.

4. Procédé de fabrication d'assemblages par brasure à haute résistance selon l'une des revendications 1 à 3, caractérisé en ce que les alésages individuels présentent des diamètres uniformes, des profondeurs uniformes et des espacements uniformes.

5. Procédé de fabrication d'assemblages par brasure à haute résistance selon l'une des revendications 1 à 4, caractérisé en ce qu'au moins 10% de la surface à braser est structurée par des alésages.
